# EUROPÄISCHE PATENTANMELDUNG

(11) **EP 1 294 070 A1**
(43) Veröffentlichungstag der Anmeldung: **19.03.2003**
(21) Anmeldenummer: 01121901.1
(22) Anmeldetag: 12.09.2001
(51) Int. Cl.: H02H 7/085

(54) **Verfahren und Vorrichtung zur Stillstandssteuerung eines einen Elektromotor enthaltenden Antriebs für Gegenstände, insbesondere zwangsbewegte Gegenstände**

(71) Anmelder: SCHENKER STOREN AG, 5012 Schönenwerd (CH)
(72) Erfinder: Bachmann, Jürg, 5004 Aarau (CH); Eggli, Roland, 2502 Biel (CH)
(74) Vertreter: Patentanwälte Schaad, Balass, Menzl & Partner AG

(57) **Zusammenfassung**

Die Erfindung betrifft ein Verfahren zur Stillstandssteuerung eines einen Elektromotor (4) enthaltenden Antriebs (13) für Gegenstände (1), insbesondere zwangsbewegte Gegenstände, wobei der Elektromotor (4) beim Auftreffen auf einen mechanischen Widerstand abgeschaltet wird. Erfindungsgemäss wird bei eingeschaltetem Elektromotor (4) ein Ist-Wert, der ein Mass für den Vortrieb oder die Belastung des Antriebs (13) ist, laufend erfasst und laufend mit einer vorbestimmten Grenzfunktion verglichen, wobei der Elektromotor (4) abgeschaltet wird, wenn der Ist-Wert die Grenzfunktion über- oder unterschreitet. Die Grenzfunktion wird vorzugsweise in einem Lerndurchlauf anhand des realen Betriebsverhaltens ermittelt. Die Erfindung betrifft weiterhin eine Vorrichtung zur Durchführung des Verfahrens.

## Beschreibung

Die Erfindung betrifft ein Verfahren zur Stillstandssteuerung eines einen Elektromotor enthaltenden Antriebs für Gegenstände, insbesondere zwangsbewegte Gegenstände nach Anspruch 1 und eine Vorrichtung zur Durchführung des Verfahrens nach Anspruch 11.

Bei elektrisch angetriebenen Rolläden und dergleichen ist es bekannt, die gewünschten oberen und unteren Endpositionen mit mechanischen Begrenzungsendschalteinrichtungen einzustellen. Dabei wird die Antriebswelle über sogenannte Wellen-Endschalter in der oberen oder unteren Endlage angehalten. Es ist hierbei jedoch nicht möglich, die Rolläden und/oder den Antrieb während der Bewegung vor Beschädigungen zu schützen, die aus einer Blockade oder einem Verklemmen des Rolladens resultieren können. Beispielsweise kann der angetriebene Gegenstand durch mechanische Hindernisse in seinem Bewegungsweg blockiert werden, wodurch es zu Beschädigungen des angetriebenen Gegenstands und des Hindernisses kommen kann. Des weiteren kann der Antrieb dabei überhitzen. Eine Überhitzung tritt auch auf, wenn der angetriebene Gegenstand in seiner Ruhestellung festgefroren ist und der Antrieb dennoch betrieben wird.

Aus der DE-A 44 40 449 ist eine Einrichtung bekannt, bei der der Antrieb bzw. der angetriebene Gegenstand auch während der Bewegung zwischen den Endpositionen auf das Auftreten einer mechanischen Belastung überwacht wird. Hierbei wird das Drehmoment des Elektromotors laufend elektronisch erfasst und der Elektromotor bei Überschreitung eines vorgegebenen, konstanten Drehmoments und einer vorgegebenen, konstanten Drehmomentänderung abgeschaltet. Dazu wird der im Elektromotor durch die Motorenwicklung fliessende Strom ausgewertet. Des weiteren ist bekannt, das Streufeld des Elektromotors zu erfassen und den Antrieb bei einer vorbestimmten Streufeldänderung abzuschalten.

Die genannten Verfahren bewirken, dass der Antrieb des bewegten Gegenstands bei Auftreffen auf einen Widerstand abgeschaltet wird. Allerdings ist das Abschaltkriterium als konstanter Wert vom Hersteller vorgegeben. Wegen der im Normalbetrieb auftretenden Abweichungen, die kein Hinweis auf Störungen sind, muss die überwachte Grösse grundsätzlich einen verhältnismässig grossen Toleranzbereich aufweisen. Dieses kann eine verminderte Betriebssicherheit bewirken. Beispielsweise bleiben bei bekannten Steuervorrichtungen die Grösse und das Gewicht des angetriebenen Gegenstands und etwaige Fertigungs- und Montagetoleranzen unberücksichtigt. Dies kann dazu führen, dass der Antrieb auch ohne tatsächliches Hindernis abgeschaltet oder trotz Vorliegen eines Hindernisses nicht abgeschaltet wird. Des weiteren können beispielsweise durch Korrosion hervorgerufene Veränderungen im Laufverhalten, die nicht durch ein äusseres Hindernis bedingt sind, zum unerwünschten Anhalten des Antriebs führen. Unterschiedliches Laufverhalten in unterschiedlichen Bewegungsrichtungen findet ebenfalls keine Berücksichtigung. Schliesslich können momentane Änderungen der überwachten Betriebsgrösse auch durch Antrieb einer weiteren Bewegung hervorgerufen werden, z.B. Stellungsänderung von Lamellen einer Lamellenstore, was ebenfalls nicht zum Abschalten des Antriebs führen darf.

Der Erfindung liegt daher die Aufgabe zugrunde, ein Verfahren zur Stillstandssteuerung eines einen Elektromotor enthaltenden Antriebs für Gegenstände, insbesondere zwangsbewegte Gegenstände, anzugeben, bei welchem bei hoher Betriebssicherheit Belastungen durch mechanische Hindernisse mit grösserer Zuverlässigkeit erfasst werden. Des weiteren soll eine Vorrichtung zur Durchführung des Verfahrens zur Verfügung gestellt werden.

Die Aufgabe wird gelöst durch ein Verfahren zur Stillstandssteuerung eines einen Elektromotor enthaltenden Antriebs für Gegenstände, insbesondere zwangsbewegte Gegenstände, mit den Merkmalen von Anspruch 1. Die Aufgabe wird weiterhin gelöst durch eine Vorrichtung zur Durchführung des Verfahrens mit den Merkmalen von Anspruch 11. Vorteilhafte Weiterbildungen des Verfahrens sind in den abhängigen Ansprüchen und der Beschreibung geschildert und in den Zeichnungen dargestellt.

Die Erfindung eignet sich für sämtliche Gegenstände, die durch einen Antrieb entlang eines vorgegebenen Weges zwischen wenigstens zwei Endpositionen bewegt werden und deren Bewegung durch mechanische Hindernisse behindert werden könnte. Insbesondere eignet sie sich für zwangsbewegte Gegenstände, die bei ihrer Bewegung in den Bewegungsweg kommende Personen oder Objekte verletzen können oder bei der Blockade durch ein solches Hindernis beschädigt werden oder zur Schädigung des Antriebs infolge Überbelastung führen. Im folgenden werden Storen als angetriebener Gegenstand beispielhaft genannt. Die Erfindung ist jedoch für beliebige, insbesondere mechanisch steife und/oder zwangsbewegte Gegenstände einsetzbar, z.B. Lamellenstoren, Jalousien, Markisen, Filmleinwände, Tore, Rolltore, Fahrstuhltüren und dergleichen. Diese können beispielsweise in Schienen geführt sein.

Beim erfindungsgemässen Verfahren wird bei eingeschaltetem Elektromotor ein Ist-Wert, der ein Mass für den Vortrieb oder die Belastung des Antriebs ist, laufend erfasst und laufend mit einer vorbestimmten Grenzfunktion verglichen. Der Elektromotor wird abgeschaltet, wenn der Ist-Wert die Grenzfunktion über- bzw. unterschreitet. "Laufend" bedeutet, dass der Ist-Wert während des Bewegungsvorgangs mehrfach ermittelt wird, vorzugsweise kontinuierlich oder in regelmässigen Zeitabständen. Der Vergleich mit den Daten der Grenzfunktion erfolgt ebenfalls mehrere Male, vorzugsweise, jedoch nicht notwendig, für jeden einzelnen ermittelten Ist-Wert. Unter Grenzfunktion wird eine Mehrzahl von Grenzwerten verstanden, mit denen die ermittelten Ist-Werte verglichen werden. Dabei ist jedem Ist-Wert, für den ein solcher Vergleich durchgeführt wird, ein bestimmter Grenzwert zugeordnet. Die Grenzfunktion beschreibt das typische Laufverhalten der Anlage im Normalbetrieb, vorzugsweise ist jeder möglichen Bewegungsrichtung eine eigene Grenzfunktion zugeordnet. Die Grenzfunktion ist in der Regel nicht konstant, kann aber anlagenspezifisch auch eine konstante Funktion sein.

Das Verfahren hat den Vorteil, dass jedem Antrieb und jeder Bewegungsrichtung individuell eine Grenzfunktion zugeordnet werden kann, die den Toleranzbereich für optimales Laufverhalten beschreibt und dabei Abweichungen zuverlässig detektierbar macht. Insbesondere ist verschiedenen Orten innerhalb des Weges des angetriebenen Gegenstands individuell ein Grenzwert zugeordnet, wobei der Antrieb angehalten wird, wenn der an diesem Ort bestimmte Ist-Wert diesen über- bzw. unterschreitet. Mit anderen Worten stellt der Grenzwert eine obere oder untere Grenze für den überwachten Parameter dar. Damit kann der Tatsache Rechnung getragen werden, dass der Ist-Wert während der Bewegung des Gegenstands auch im Normalbetrieb nicht notwendig konstant ist, sondern an bestimmten Stellen Abweichungen zeigt, die nicht durch ein mechanisches Hindernis verursacht sind. Indem die Grenzfunktion in einer vorteilhaften Weiterbildung des Verfahrens in einem Lerndurchlauf anhand der erfassten Ist-Werte ermittelt wird, kann die Antriebsteuerung an die individuellen Gegebenheiten der Anlage angepasst werden. Es ist keine Vorgabe vom Hersteller notwendig und die konkrete Einbausituation, die Grösse und das Gewicht des Gegenstands werden automatisch berücksichtigt. Diese Anpassung bzw. Bestimmung der Grenzfunktion kann auch vom Benutzer ausgelöst und bei Bedarf wiederholt werden. Auf diese Weise können mechanische Veränderungen der Anlage, die ihre Funktion nicht weiter beeinträchtigen, z.B. Korrosion oder temperaturbedingte Verformungen, berücksichtigt werden.

Der Ist-Wert wird vorzugsweise als Funktion der Zeit oder des Ortes erfasst. Beispielsweise wird er in regelmässigen zeitlichen, örtlichen oder Winkel-Abständen gemessen. Als Ist-Wert selbst kommen alle Grössen in Betracht, die ein Mass für den Vortrieb oder die Belastung des Antriebs sind, z.B. zum Drehmoment des Elektromotors oder dessen Änderung proportionale Grössen. Der Ist-Wert kann eine direkte Messgrösse oder eine daraus berechnete Grösse sein. Besonders bevorzugt wird die Winkelstellung bzw. der bewirkte Linearversatz des Antriebs als Funktion der Zeit ausgewertet, insbesondere in regelmässigen Zeitabständen. Aus dem seit Anschalten des Antriebs zurückgelegten Winkel lässt sich der Ort des Gegenstandes innerhalb seiner Bewegungsbahn berechnen. Die der Differenz der Winkelstellungen oder des Versatzes in zwei aufeinanderfolgenden Intervallen ergibt den Ist-Wert für den Vortrieb des Antriebs. Auf den Parameter Winkelstellung kann auch bei bestehenden Anlagen problemlos zugegriffen werden, so dass diese auf einfache Weise auch nach ihrem Einbau mit einer erfindungsgemässen Steuervorrichtung ausgerüstet werden können. Grundsätzlich eignen sich auch die im Stand der Technik zur Stillstandssteuerung verwendeten Grössen als Ist-Wert, z.B. das Streufeld des Elektromagneten oder der Stromfluss durch seine Spulen.

Die Grenzfunktion dient dazu, ein idealisiertes bzw. noch tolerierbares Verhalten der Anlage zu beschreiben, wobei eine Abweichung von dieser Vorgabe zum Anhalten der Anlage führt. Sie wird vorzugsweise aus den in einem Lerndurchlauf erfassten Ist-Werten ermittelt, indem diese mit einem geeigneten Filter bzw. Algorithmus verarbeitet werden. Vorzugsweise ist die Grenzfunktion als Funktion des Ortes bzw. der Stellung des Gegenstands gespeichert. Die Ist-Werte werden als Funktion des Ortes aufbereitet. Dieses hat den Vorteil, dass ein zwischenzeitlicher Stillstand der Anlage automatisch berücksichtigt wird.

Die erfindungsgemässe Steuervorrichtung umfasst wenigstens Messmittel zum Erfassen der Ist-Werte oder von zur Bestimmung der Ist-Werte dienenden Grössen, eine Speichereinheit zum Speichern der Daten der Grenzfunktion, eine Rechen- und Steuereinheit zum Vergleichen der Ist-Werte mit Daten der Grenzfunktion und zum Abschalten des Elektromotors. Vorzugsweise sind auch Speicher zur Zwischenspeicherung der ermittelten Ist-Werte sowie gegebenenfalls eine Recheneinheit zur Berechnung der Ist-Werte, falls diese nicht direkte Messgrössen sind, vorhanden. Zur Durchführung eines Lerndurchlaufs weist die Steuervorrichtung vorzugsweise auch eine Recheneinheit auf, mit der aus den gemessenen Grössen in vorbestimmter Weise eine Grenzfunktion ermittelt werden kann.

Beispiele der Erfindung sind in den Zeichnungen dargestellt und nachfolgend beschrieben. Dabei zeigen rein schematisch:
- Fig. 1: ein Blockschaltbild einer erfindungsgemässen Steuervorrichtung in Verbindung mit einem Antrieb und einem angetriebenen Gegenstand;
- Fig. 2a-g: die Ermittlung von Daten einer Grenzfunktion aus Ist-Werten;
- Fig. 3: ein Beispiel für erfasste Ist-Werte und daraus ermittelte Grenzfunktionen als Funktion des Ortes;
- Fig. 4: ein Beispiel für das Anhalten des Antriebs bei Unterschreiten der Grenzfunktion;
- Fig. 5: ein Beispiel für das Anfahren des Antriebs nach einer Unterbrechung.

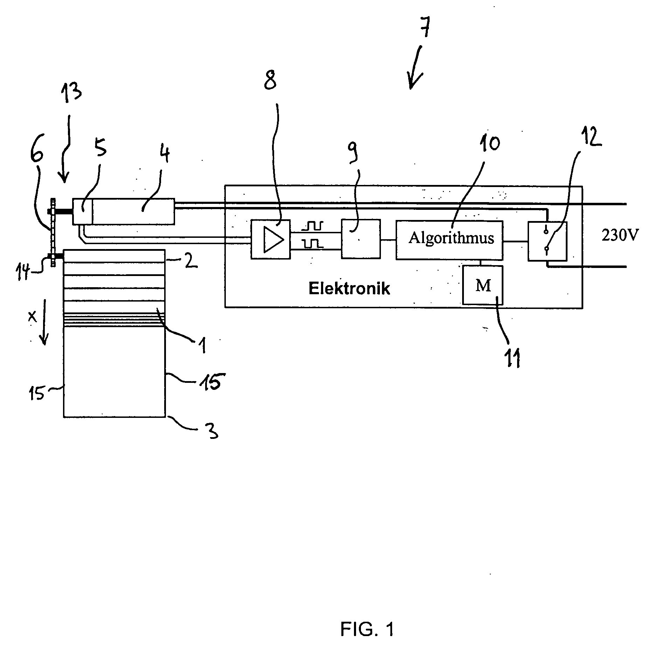

Figur 1 zeigt eine erfindungsgemässe Steuervorrichtung 7 zur Stillstandssteuerung eines angetriebenen Gegenstands 1, der hier beispielhaft als zwangsbewegte Lamellenstore dargestellt ist. Der Gegenstand 1 wird mit einem einen Elektromotor 4 umfassenden Antrieb 13 zwischen einer oberen und einer unteren Endlage 2, 3 bewegt. Die mit x bezeichnete Richtung gibt die Bewegungsrichtung auf dem Hinweg an, d.h. beim Herunterfahren der Lamellenstore. Der Gegenstand 1 ist beispielsweise in einer Schiene 15 geführt. Der Antrieb umfasst des weiteren Mittel 6, hier eine Kette, zur Übertragung der Antriebskraft des Motors 4 auf den Gegenstand 1 bzw. eine damit verbundene Welle 14, auf die er in der oberen Endlage weitgehend aufgewickelt ist. Der Elektromotor 4 kann in Vorwärtsrichtung und in Rückwärtsrichtung betrieben werden und ist ist mit einem Schalter 12 an- und abschaltbar. Der Schalter 12 kann sowohl manuell betätigt werden als auch von einer Steuerund Recheneinheit 10 angesteuert werden.

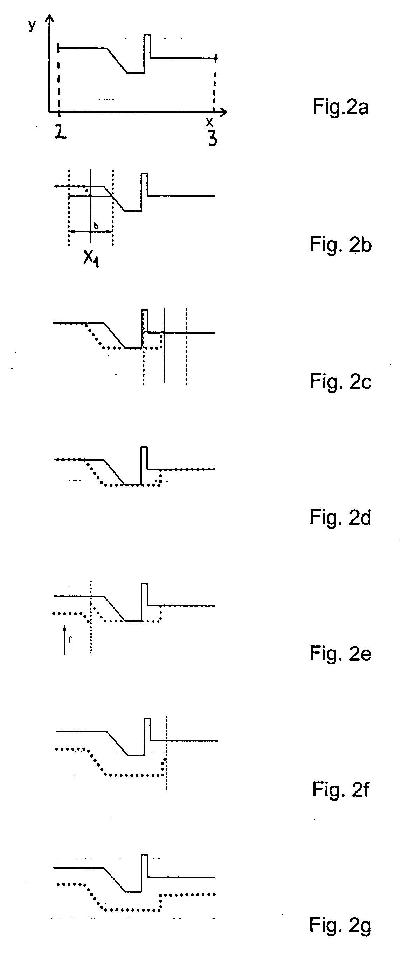

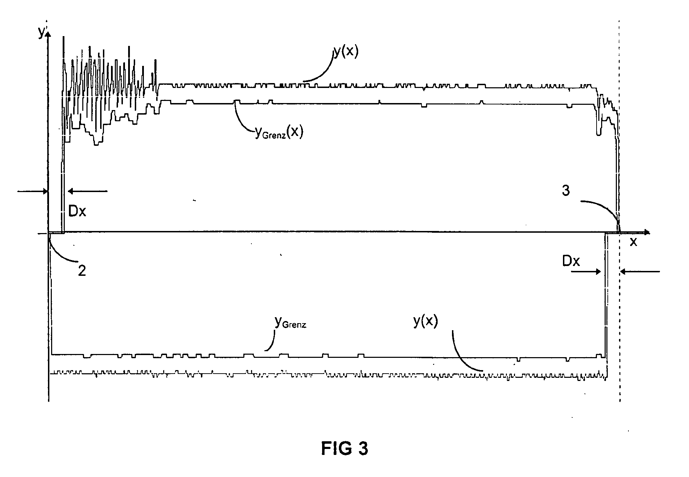

Erfindungsgemäss umfasst die Steuervorrichtung 7 Messmittel 5 zur wenigstens indirekten Bestimmung eines geeigneten Ist-Werts. Als Messmittel 5 dient hier ein Encoder, der als Ausgangssignal in regelmässigen Zeitabständen beispielsweise eine Winkelstellung des Elektromotors oder einen dieser Winkelstellung entsprechenden Linearversatz ausgibt. Zusätzlich wird stets der im vorhergehenden Zeitintervall erfasste Wert ausgegeben. Die Signale werden in einer Eingangsstufe 8 entstört und verstärkt und in einer Wegmesseinrichtung 9 umgerechnet in die zum Erfassungszeitpunkt insgesamt zurückgelegte Strecke x sowie den momentanen Vortrieb Δx, der vorliegend den Ist-Wert darstellt. Dieser Ist-Wert y=Δx wird in der Steuer- und Recheneinheit 10 mit vorbestimmten Grenzwerten Δx_{Grenz} verglichen. Diese sind in einer Speichereinheit 11 gespeichert, wobei vorzugsweise jedem Ort x ein Grenzwert y_{Grenz}=Δx_{Grenz} zugeordnet ist. Die Grenzfunktion y_{Grenz}(x)=Δx_{Grenz}(x) wurde in einem Lerndurchlauf ermittelt, wie anhand der Figuren 2a-g beschrieben wird. In Figur 3 ist ein experimentelles Beispiel für eine Messkurve und eine Grenzfunktion dargestellt.

Ist der Ist-Wert betragsmässig kleiner als der entsprechende Wert der Grenzfunktion, erzeugt die Steuerund Recheneinheit 10 ein Abschaltsignal, mit dem der Schalter 12 betätigt wird. Der Antrieb kann anschliessend manuell wieder in Gang gesetzt werden. Auch kann ein automatisches Weiterfahren nach einer Wartezeit vorgesehen sein.

In Figur 2a-g ist die Generierung der Grenzfunktion y_{Grenz}(x) aus einer für den Hinweg gemessenen Charakteristik y(x) schematisch dargestellt. Der Ist-Wert y ist für Positionen x aufgetragen, die zwischen der oberen und der unteren Endlage 2, 3 liegen. Der Wert y ist zunächst konstant, um dann abzufallen und schliesslich über einen kurzen sprunghaften Anstieg wieder das ursprüngliche Niveau zu erreichen. Dieses Verhalten wird beispielsweise durch einen Widerstand in der Bewegungsbahn hervorgerufen, an dem der Gegenstand abgebremst wird und den er schliesslich durch den weiteren Druck des Antriebs mit erhöhter Geschwindigkeit überwindet. Dieses Verhalten wird als normal angesehen und soll nicht zum Abschalten des Antriebs führen. Zur Generierung des Grenzwerts am Ort x1 wird ein Filter der Breite b um die Ist-Werte y im Intervall (x1-b/2; x1+b/2) gelegt, vgl. Fig. 2b. Das Minimum von y in diesem Intervall wird ermittelt und x1 zugeordnet, vgl. gepunktete Kurve in Fig. 2b-d. Auf diese Weise wird die gemessene Kurve geglättet. Selbstverständlich sind andere Filtermechanismen denkbar. Die Minimum-Funktion hat den Vorteil, dass sie schaltungs- bzw. rechentechnisch sehr einfach zu realisieren ist und ihren Zweck bereits erfüllt, da betragsmässige Abweichungen des

Ist-Werts Geschwindigkeit bzw. Δx nach oben nicht zum Abschalten des Antriebs führen müssen und daher auch nicht erfasst zu werden brauchen. Die ermittelten Minimum-Werte werden schliesslich mit einem Faktor f, der zwischen 0 und 1 liegt, multipliziert, vgl. Fig. 2e-2g. Es ist auch denkbar, die Minimum-Funktion mit einem konstanten negativen Offset zu versehen. Die so ermittelte Grenzfunktion y_{Grenz}(x)=f ·MIN(y; (x1-b/2; x1+b/2)) bestimmt für jeden x-Wert einen (betragsmässig) unteren Grenzwert, der im normalen Betrieb nicht unterschritten werden darf. Beim Rückweg liegen negative Geschwindigkeiten vor, so dass sich die Verhältnisse umkehren (vgl. Fig 3 unterer Teil).

Die Ist-Werte werden beispielsweise alle 2 bis 10 ms abgetastet. Die Filterbreite b entspricht beispielsweise etwa 100 Messpunkten. Der Faktor f liegt vorzugsweise zwischen 0,9 und 0,95.

Figur 3 zeigt ein Beispiel für gemessene Kurven y(x) (Geschwindigkeiten bzw. Δx als Funktion des Ortes x) und daraus ermittelte Grenzfunktionen y_{Grenz}(x). Der Bereich für y>0 zeigt die Charakteristik der Anlage in positiver x-Richtung (Hinweg), z.B. beim Hinabfahren des Rolladens, der Bereich für y<0 zeigt den umgekehrten Vorgang (Rückweg). Beim Hinweg treten nach Anschalten des Antriebs starke Geschwindigkeitsschwankungen auf, die durch die positionsabhängigen mechanischen Eigenschaften des angetriebenen Gegenstands verursacht sind. Die Geschwindigkeit ist danach annähernd konstant und fällt bei Erreichen der Endlage 3 auf Null ab. Kurz vor Erreichen der Endlage 3 ist ein Ausschlag nach unten sichtbar, der durch das Umklappen der Lamellen hervorgerufen wird und zum Normalbetrieb gehört. Bei der entsprechenden Hinweg-Grenzfunktion steigt die Grenzfunktion - mit einigen Restschwankungen - auf einen weitgehend konstanten Wert an. Beim Rückweg ist das Laufverhalten der Anlage ruhiger, was sich auch in der nahezu flachen Rückweg-Grenzfunktion äussert. Das unterschiedliche Verhalten in beiden Bewegungsrichtungen wird durch das erfindungsgemässe Verfahren erfasst. Damit wird auch die Empfindlichkeit gegenüber herkömmlichen Steuervorrichtungen erhöht, denn bisher hätte beispielsweise die Toleranz über den gesamten Bewegungsbereich (Hin- und Rückweg) so gewählt werden müssen, dass die normalen anfänglichen Schwankungen nicht zum Abschalten führen.

Figur 3 ist weiterhin zu entnehmen, dass während einer Periode Dt bzw. hier einem Abschnitt der Breite Dx der Bewegungsbahn nach dem Anfahren bzw. ab den Endlagen 2, 3 keine Ist-Werte erfasst werden und die Grenzfunktion den Wert Null annimmt. In diesem Bereich beobachtet man häufig starke Ist-Wertschwankungen, die beispielsweise durch das Anfahren selbst hervorgerufen werden und kein Indiz für mechanische Hindernisse in der Bewegungsbahn sind. Dieser Bereich wird daher nicht ausgewertet. Dx bzw. Dt sollte jedoch so klein sein, dass beispielsweise durch Vereisung hervorgerufene Störungen erfasst werden.

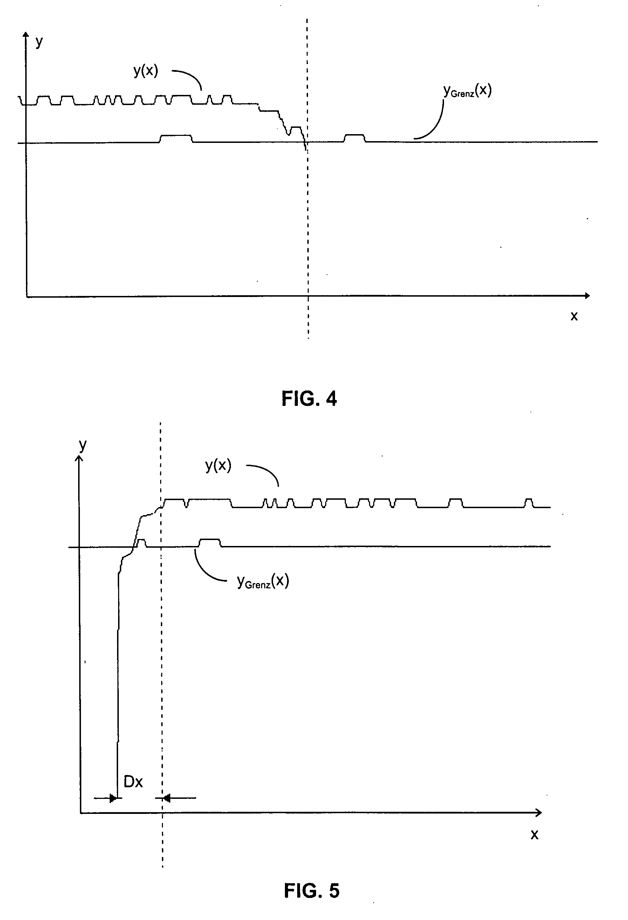

Figur 4 zeigt einen Ausschnitt aus einer Grenzfunktion und einer gemessenen Ist-Wertkurve, die die Grenzfunktion unterschreitet. Die Grenzfunktion ist annähernd flach, was z.B. dem Bereich in der Mitte zwischen den Positionen 2 und 3 in Figur 3 entspricht. Der Ist-Wert verläuft zunächst oberhalb der Grenzfunktion und fällt dann ab. Das Unterschreiten der Grenzfunktion - kenntlich gemacht durch die senkrechte gestrichelte Linie - ist das Abschaltkriterium. Die Steuervorrichtung erzeugt daraufhin ein Abschaltsignal, woraufhin der Antrieb angehalten wird.

Figur 5 zeigt einen Ausschnitt aus einer Grenzfunktion und einer gemessenen Ist-Wertkurve beim Wiedereinschalten des Antriebs. Die Grenzfunktion ist wiederum annähernd flach. Der Ist-Wert ist zunächst Null (ausgeschalteter Antrieb) und steigt dann sprunghaft auf sein ursprüngliches, über der Grenzfunktion liegendes Niveau an. Damit die Ist-Wert-Überwachung nicht schon während des Einschaltvorgangs anspricht, wird die Überwachung für ein Ortsintervall Dx bzw. eine entsprechende Zeitdauer deaktiviert.

## Patentansprüche

1. Verfahren zur Stillstandssteuerung eines einen Elektromotor (4) enthaltenden Antriebs (13) für Gegenstände (1), insbesondere zwangsbewegte Gegenstände, wobei der Elektromotor (4) bei Vorliegen eines mechanischen Widerstands abgeschaltet wird, **dadurch gekennzeichnet, dass** bei eingeschaltetem Elektromotor (4) ein Ist-Wert, der ein Mass für den Vortrieb oder die Belastung des Antriebs (13) ist, laufend erfasst und laufend mit einer vorbestimmten Grenzfunktion verglichen wird, wobei der Elektromotor (4) abgeschaltet wird, wenn der Ist-Wert die Grenzfunktion über- bzw. unterschreitet.

2. Verfahren nach Anspruch 1, **dadurch gekennzeichnet, dass** die Grenzfunktion aus Ist-Werten bestimmt wird, die in einem Lerndurchlauf erfasst und aufgezeichnet wurden.

3. Verfahren nach Anspruch 2, **dadurch gekennzeichnet, dass** die Grenzfunktion bestimmt wird, indem die im Lerndurchlauf erfassten und aufgezeichneten Ist-Werte geglättet und mit einem Offset versehen oder mit einem Faktor multipliziert werden.

4. Verfahren nach Anspruch 2 oder 3, **dadurch gekennzeichnet, dass** der einem Zeitpunkt oder Ort zugeordnete Wert der Grenzfunktion bestimmt wird, indem das Minimum der Ist-Werte, die im Lerndurchlauf in einem vorbestimmten zeitlichen bzw. örtlichen Intervall erfasst und aufgezeichnet wurden, bestimmt wird und mit einem negativen Offset versehen oder mit einem Faktor aus dem Intervall (0; 1) multipliziert wird.

5. Verfahren nach einem der Ansprüche 2 bis 4, **dadurch gekennzeichnet, dass** ein Lerndurchlauf zum Bestimmen der Werte der Grenzfunktion auf Anforderung eines Benutzers durchgeführt wird, wobei die in diesem Lerndurchlauf ermittelte Grenzfunktion die früher bestimmte Grenzfunktion ersetzt.

6. Verfahren nach einem der vorangegangenen Ansprüche, **dadurch gekennzeichnet, dass** der Ist-Wert als Funktion der Zeit oder des Ortes erfasst wird.

7. Verfahren nach einem der vorangegangenen Ansprüche, **dadurch gekennzeichnet, dass** die Ist-Werte in vorbestimmten Zeitabständen erfasst und aufgezeichnet werden.

8. Verfahren nach einem der vorangegangenen Ansprüche, **dadurch gekennzeichnet, dass** eine Grösse als Ist-Wert dient, die ein Mass für das Drehmoment des Elektromotors (4) ist.

9. Verfahren nach einem der vorangegangenen Ansprüche, **dadurch gekennzeichnet, dass** die Winkelstellung oder der lineare Versatz des Antriebs in vorbestimmten Zeitabständen erfasst und aufgezeichnet wird, dass daraus die Winkelgeschwindigkeit oder Geschwindigkeit des Antriebs oder die Winkeländerung oder der momentane Vortrieb als Funktion des Ortes bestimmt und mit der vorgegebenen Grenzfunktion in Abhängigkeit vom Ort verglichen wird.

10. Verfahren nach einem der vorangegangenen Ansprüche, **dadurch gekennzeichnet, dass** innerhalb eines vorbestimmten Zeit- oder Ortsintervalls nach dem Anfahren des Antriebs keine Ist-Werte aufgezeichnet werden oder die aufgezeichneten Ist-Werte nicht mit der Grenzfunktion verglichen werden.

11. Vorrichtung zur Durchführung des Verfahrens nach einem der vorangegangenen Ansprüche mit Messmitteln (5) zum Erfassen der Ist-Werte oder von zur Bestimmung der Ist-Werte dienenden Grössen, einer Speichereinheit (11) zum Speichern der Daten der Grenzfunktion, einer Rechen- und Steuereinheit (10) zum Vergleichen der Ist-Werte mit Daten der Grenzfunktion und zum Abschalten des Elektromotors.

12. Vorrichtung nach Anspruch 11, **dadurch gekennzeichnet, dass** die Rechen- und Steuereinheit (10) imstande ist, die Daten der Grenzfunktion aus den in einem Lerndurchlauf aufgezeichneten Ist-Werten nach einem vorbestimmten Algorithmus zu berechnen.
